# FASCICULE DE BREVET EUROPEEN

(11) **EP 1 323 617 B1**
(45) Date de publication et mention de la délivrance du brevet: **14.07.2004**
(21) Numéro de dépôt: 02293139.8
(22) Date de dépôt: 18.12.2002
(51) Int. Cl.: B62D 1/04, B62D 1/10

(54) **Ensemble de direction pour véhicule automobile**
Lenkeinrichtung für ein Kraftfahrzeug
Steering assembly for a motor vehicle

(30) Priorité: 20.12.2001 FR 0116517
(43) Date de publication de la demande: 02.07.2003
(73) Titulaire: Peugeot Citroen Automobiles SA, 92200 Neuilly sur Seine (FR)
(72) Inventeur: Bailleux, François, 91400 Val d'Albian (FR)
(74) Mandataire: Timoney, Ian Charles Craig

(56) Documents cités:
- US-A- 4 485 371
- US-A- 4 541 301
- US-A- 4 604 912

## Description

La présente invention se rapporte à un ensemble de direction d'un véhicule, ensemble tel que défini dans le préambule de la revendication 1 et connu par exemple du document US 4 485 371 A.

De manière conventionnelle, un ensemble de direction de véhicule, plus particulièrement d'une voiture, comprend une colonne de direction à une extrémité de laquelle est monté fixe un volant. Le volant comprend un moyeu central autour duquel est disposé un anneau destiné à être tenu par le conducteur. Le moyeu central est typiquement muni de commandes, par exemple des interrupteurs, destinées à être actionnées manuellement par le conducteur.

Le moyeu central du volant peut également être muni d'un système de sécurité tel un sac gonflable, plus communément appelé « air bag ».

Le fait que le moyeu tourne avec le volant oblige les fabricants de sacs gonflables à leur donner une forme symétrique par rapport à leur centre afin qu'ils puissent agir de façon sûre quel que soit l'angle du volant. Néanmoins, il serait préférable, pour un fonctionnement optimal du sac, de lui donner une forme asymétrique, mais cela oblige le constructeur à le monter sur un moyeu fixe disposé à l'intérieur du volant qui, lui, est libre en rotation.

On connaît du document US 4 561 324 un ensemble de direction dans lequel le moyeu du volant est agencé afin de rester fixe pendant que le volant est libre en rotation avec la colonne de direction. Le moyeu peut recevoir un sac gonflable qui peut avantageusement avoir une forme asymétrique.

On connaît également du document US 4 604 912 un ensemble de direction muni d'un moyeu de volant fixe qui comporte diverses commandes destinées à être actionnées manuellement.

Ce type d'ensemble présente des inconvénients dans la mesure où lors d'une rotation du volant, les commandes disposées sur le moyeu fixe ne se trouvent plus à la portée des doigts du conducteur, ce qui l'oblige à les chercher visuellement, quittant la route des yeux pendant ce temps.

La demanderesse s'est fixé pour objectif de surmonter les difficultés et les inconvénients rencontrés dans l'art antérieur en proposant un ensemble de direction qui assure que les commandes disposées sur le moyeu du volant se trouvent toujours à la portée des doigts du conducteur, et ce quel que soit l'angle du volant, et qui permet de monter un sac gonflable de forme optimale.

Aussi, la présente invention a trait à un ensemble de direction d'un véhicule comprenant une colonne de direction à une extrémité de laquelle est monté fixé un volant, un moyeu monté adjacent au volant mais monté rotatif par rapport à celui-ci et comprenant des moyens fonctionnels, l'ensemble de direction comprenant de plus des moyens pour mettre le moyeu en rotation, caractérisé en ce que ces moyens comprennent un moteur électrique relié au moyeu par un ressort de section rectangulaire.

De préférence, le ressort a une forme hélicoïdale.

Avantageusement, le ressort est formé en acier ou matériau composite et comporte environ six spires.

De préférence, les moyens fonctionnels comprennent un sac gonflable de sécurité ou des commandes.

D'autres caractéristiques et avantages de la présente invention vont maintenant être décrits de manière plus détaillée à l'aide des dessins annexés donnés à titre illustratif et non limitatif et dans lesquels :
- la Figure 1 est une section schématique d'un ensemble de direction selon l'art antérieur;
- la Figure 2A est une section d'un ensemble de direction selon un premier mode de réalisation de l'invention;
- la Figure 2B est une section d'un ensemble de direction selon un deuxième mode de réalisation de l'invention;
- la Figure 3 est une vue en perspective d'un élément de la Figure 2A ;
- la Figure 4 est un logigramme illustrant des moyens permettant la mise en oeuvre de l'invention ; et
- la Figure 5 représente les différentes possibilités de pilotage de l'ensemble de direction selon l'invention .

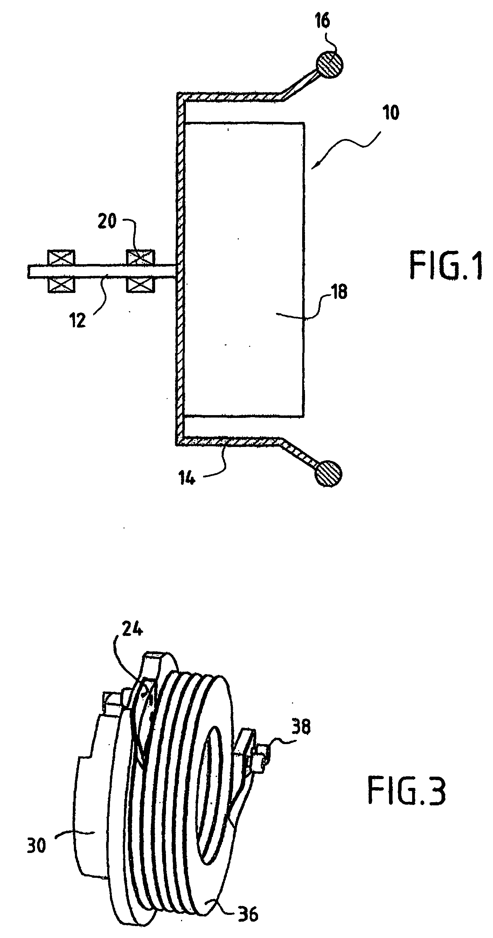

Sur la Figure 1 est représenté schématiquement un ensemble de direction 10 de construction conventionnelle. Cet ensemble comprend une colonne de direction 12 à une extrémité de laquelle est monté fixe un volant 14 formé d'un anneau 16, destiné à être tenu par un conducteur, disposé autour d'un moyeu 18. La colonne est libre en rotation par rapport à la structure du véhicule (non représentée) grâce aux roulements 20. Le moyeu 18 est muni d'un sac gonflable qui, afin qu'il puisse agir de façon sûre quel que soit l'angle du volant, a une forme symétrique par rapport à son centre.

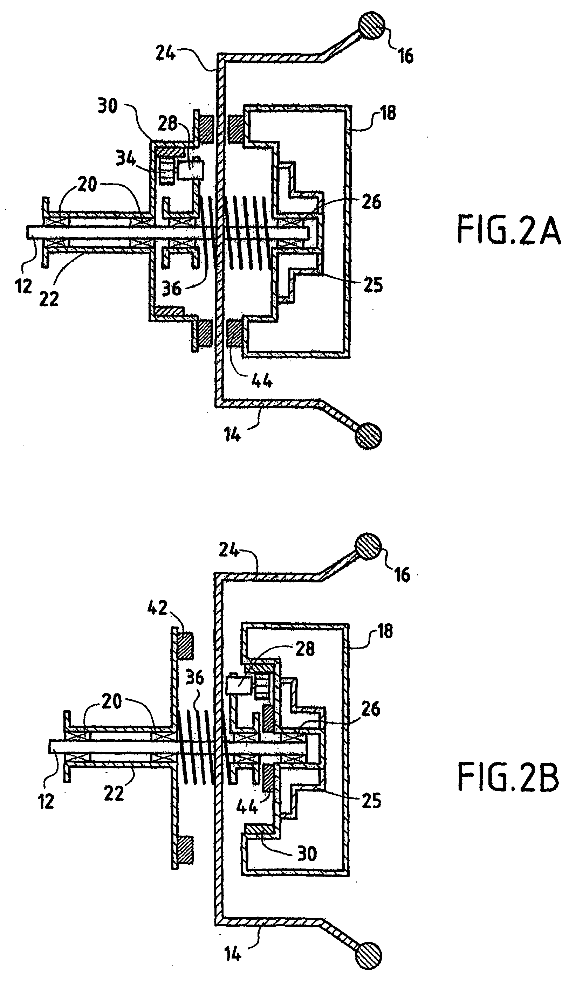

La Figure 2A représente l'ensemble de direction selon l'invention. Les éléments de cet ensemble qui sont communs avec l'ensemble de la Figure 1 portent les mêmes chiffres de référence

Comme représentée sur la figure 2, la colonne de direction 12, montée sur la structure 22 du véhicule au moyen de roulements 20, comporte un volant 14 formé de branches 24 et d'un anneau 16. Un moyeu 18 monté à l'intérieur du volant 14 comporte des moyens fonctionnels tels qu'un sac gonflable de sécurité ou des commandes électriques (non-représentés). Le moyeu 18 est monté sur une bague 25 qui est libre uniquement en rotation par rapport au volant 14 et par rapport à la structure du véhicule 22 au moyen des roulements à billes 26

Le moyeu 18 est destiné à être mis en rotation de manière indépendante du mouvement du volant 14. A cette fin, un moteur électrique 28 est monté fixe sur la structure du véhicule 22 et s'étend généralement coaxialement avec la colonne de direction 12. Une roue dentée 30 est disposée libre en rotation autour de la colonne de direction 12 par des roulements 32. Le moteur électrique comporte un pignon 34 qui coopère avec la roue dentée 30. Ainsi, une rotation du moteur électrique 28 provoque une rotation de la roue dentée 30.

Selon l'invention, la roue dentée 30 est reliée à la bague 25 de support du moyeu 18 par un ressort 36. Le ressort 36 a une forme hélicoïdale de section rectangulaire dont la largeur est plusieurs fois supérieure à l'épaisseur afin de lui donner une forme plate. De préférence, le ressort est formé en acier ou en matériau composite et comporte environ six spires.

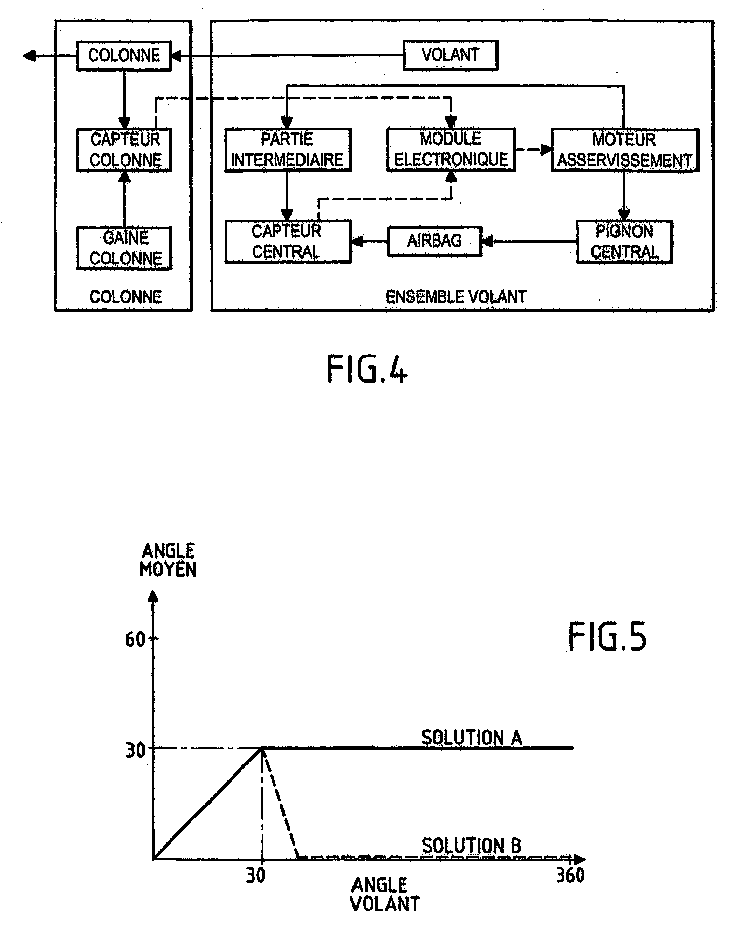

Le ressort 36 est représenté plus en détail sur la Figure 3. La section du ressort est rectangulaire, ses dimensions sont de l'ordre de 1mm sur 20mm. A son extrémité opposée à la roue dentée 30, le ressort comporte des fixations 38 destinées à le rendre solidaire de la bague 25 du moyeu 18. Une des branches 24 du volant 14 est illustrée entre deux spires du ressort 36. Les branches peuvent glisser avec un minimum de frottement entre les spires du ressort, grâce notamment à un revêtement de type Téflon. Ainsi, le moteur 28 peut mettre en rotation l'ensemble formé de la roue dentée 30, le ressort 36 et le moyeu 18 tout en permettant une libre rotation du volant 14.

Le ressort 26 peut également assurer la liaison électrique entre une source (non-représentée) et les moyens fonctionnels disposés sur le moyeu 18.Les conducteurs ou fils électriques peuvent être disposés sur la surface plane du ressort ou sous la forme d'un câble multi-conducteur monté le long d'un de ces bords.

Un premier capteur de position 42, monté sur la structure 20 du véhicule permet de déterminer la position angulaire de la colonne de direction 12 et, donc, du volant 14. Un deuxième capteur de position 44, monté sur le fond 34 du moyeu 18 permet de déterminer la position angulaire du moyeu relatif au volant 14. Un calculateur, non représenté, envoie des signaux de commandes au moteur électrique 28 en fonction des données fournies pas les capteurs de position 42 et 44.

Ainsi, dans un premier mode de réalisation, lorsque le volant est mis en rotation dans un sens, le moyeu est également mis en rotation dans le même sens et à la même vitesse que le volant, jusqu'à ce que le moyeu atteigne un angle prédéterminé par rapport à la position de repos de l'ensemble de direction. Le moyeu est ensuite maintenu dans cette position quel que soit l'angle pris par le volant au delà de cet angle. De préférence, l'angle prédéterminé est 30°, mais cet angle peut se situer entre 10 et 45° environ. Une fois que le volant revient à l'angle prédéterminé, et continue de se tourner vers sa position de repos, le moyeu se met à tourner de nouveau avec le volant afin de maintenir les commandes disposées sur le moyeu à la portée des doigts du conducteur. Cette procédure est illustrée à la figure 5 -solution A.

La figure 2B représente un deuxième mode de réalisation dans lequel le moteur électrique 28 n'est plus implanté entre les branches 24 du volant et la partie fixe de la colonne 22, mais plutôt entre le volant et la bague 25 du moyeu 18. Cette solution trouve son intérêt sur certains véhicules ayant plus de place dans le volant plutôt que dans le haut de la colonne de direction 12.

Selon un mode de réalisation alternatif, lorsque le volant est mis en rotation au delà de l'angle prédéterminé, le moyeu suit le mouvement du volant jusqu'à l'angle prédéterminé, puis se met à se tourner en sens inverse pour revenir dans sa position de repos, et ce quel que soit l'angle du volant au delà de l'angle prédéterminé. Cette procédure est illustrée à la figure 5 - Solution B.

La figure 4 est un logigramme illustrant la relation entre les composants de l'ensemble de direction selon l'invention.

Lorsque le volant et le moyeu tournent avec le même angle et la même vitesse de rotation, la rotation des branches du volant est détectée par le capteur colonne qui mesure l'angle entre la colonne et la structure du véhicule 26. Cet angle est envoyé au module électronique, celui-ci donne un ordre au moteur électrique 28 afin de faire tourner le moyeu par l'intermédiaire de la roue dentée 30, le ressort 36 et la bague 25, jusqu'a obtenir un angle nul sur le capteur de position 44.

Lorsque le volant est tourné au-delà de l'angle prédéterminé, le moyeu est maintenu immobile. La rotation des branches du volant est détectée par le capteur colonne qui mesure l'angle entre la colonne et la structure 26 du véhicule. Lorsque cet angle est supérieur à l'angle prédéterminé le module électronique bloque la rotation du moteur électrique 28 afin que le moyeu soit fixe. Lorsque l'angle volant réduit en dessous de l'angle prédéterminé, le dispositif repasse dans le mode précédent.

La présente invention offre un ensemble de direction nécessitant peu de modifications à la structure du volant et du moyeu, mais qui assure que les touches de commande soient toujours à la portée des doigts du conducteur et permet d'offrir une forme optimale au sac gonflable de sécurité. De plus, il offre une forme libre au moyeu et au volant.

## Revendications

1. Ensemble de direction d'un véhicule comprenant une colonne de direction (12) à une extrémité de laquelle est monté fixé un volant (14), un moyeu (18) monté adjacent au volant mais monté rotatif par rapport à celui-ci et comprenant des moyens fonctionnels, l'ensemble de direction comprenant de plus des moyens pour mettre le moyeu en rotation, **caractérisé en ce que** ces moyens comprennent un moteur électrique (28) relié au moyeu par un ressort (36) de section rectangulaire.

2. Ensemble selon la revendication 1 **caractérisé** en ce ressort (36) a une forme hélicoïdale.

3. Ensemble selon la revendication 1 ou 2 **caractérisé en ce que** le ressort (36) est formé en acier ou en matériau composite.

4. Ensemble selon l'une des revendications précédentes **caractérisé en ce que** le moteur électrique (28) est monté fixé sur la structure du véhicule, une extrémité du ressort étant attachée à un élément monté libre en rotation par rapport à la colonne de direction, le moteur électrique étant agencé pour mettre en rotation l'élément, l'autre extrémité du ressort étant attachée au moyeu.

5. Ensemble selon l'une des revendications précédentes **caractérisé en ce que** l'ensemble comprend de plus un capteur (42) de la position angulaire du volant ainsi qu' un capteur (44) de la position angulaire du moyeu (18).

6. Ensemble selon l'une des revendication 1 à 6 **caractérisé en ce que** les moyens fonctionnels comprennent un sac gonflable de sécurité ou des commandes.

7. Ensemble selon l'une des revendications précédentes, **caractérisé en ce que** le ressort comporte de plus des moyens pour transmettre des signaux électriques.

## Claims

1. Steering assembly for a vehicle comprising a steering column (12), at one end of which is mounted, fixed, a steering wheel (14), a hub (18) mounted adjacent to the steering wheel but mounted so as to rotate relative to the latter and comprising functional means, the steering assembly further comprising means for setting the hub in rotation, **characterised in that** these means comprise an electric motor (28) connected to the hub by a spring (36) with a rectangular section.

2. Assembly according to Claim 1 **characterised in that** this spring (36) has a helical shape.

3. Assembly according to Claim 1 or 2 **characterised in that** the spring (36) is formed of steel or a composite material.

4. Assembly according to one of the preceding claims **characterised in that** the electric motor (28) is mounted, fixed, on the structure of the vehicle, one end of the spring being attached to a component that is mounted so as to rotate freely relative to the steering column, the electric motor being arranged so as to set the component in rotation, the other end of the spring being attached to the hub.

5. Assembly according to one of the preceding claims **characterised in that** the assembly further comprises a sensor (42) for the angular position of the steering wheel together with a sensor (44) for the angular position of the hub (18).

6. Assembly according to one of Claims 1 to 6 **characterised in that** the functional means comprise an inflatable safety bag or controls

7. Assembly according to one of the preceding claims **characterised in that** the spring further comprises means for transmitting electrical signals.

## Patentansprüche

1. Lenkeinrichtung eines Fahrzeugs mit einer Lenksäule (12), an deren einem Ende ein Lenkrad (14) befestigt ist, und mit einer Nabe (18), die an das Lenkrad angrenzend, aber gegenüber diesem drehbar montiert ist und Funktionsmittel aufweist, wobei die Lenkeinrichtung darüber hinaus Mittel aufweist, die die Nabe in Drehung versetzen, **dadurch gekennzeichnet, dass** diese Mittel einen Elektromotor (28) umfassen, der über eine Feder (36) mit rechteckigem Querschnitt mit der Nabe verbunden ist.

2. Einrichtung nach Anspruch 1, **dadurch gekennzeichnet, dass** die Feder (36) schraubenförmig ist.

3. Einrichtung nach Anspruch 1 oder 2, **dadurch gekennzeichnet, dass** die Feder (36) aus Stahl oder Verbundwerkstoff ist.

4. Einrichtung nach einem der vorhergehenden Ansprüche, **dadurch gekennzeichnet, dass** der Elektromotor (28) am Aufbau des Fahrzeugs befestigt ist, wobei ein Ende der Feder mit einem Element verbunden ist, das gegenüber der Lenksäule frei drehbar montiert ist, wobei der Elektromotor so angeordnet ist, dass er das Element in Drehung versetzt, und wobei das andere Ende der Feder mit der Nabe verbunden ist.

5. Einrichtung nach einem der vorhergehenden Ansprüche, **dadurch gekennzeichnet, dass** sie darüber hinaus einen Sensor (42) der Winkellage des Lenkrads sowie einen Sensor (44) der Winkellage der Nabe (18) aufweist.

6. Einrichtung nach einem der Ansprüche 1 bis 6, **dadurch gekennzeichnet, dass** die Funktionsmittel einen Sicherheits-Airbag oder Steuerungen umfassen.

7. Einrichtung nach einem der vorhergehenden Ansprüche, **dadurch gekennzeichnet, dass** die Feder außerdem Mittel zum Übertragen der elektrischen Signale aufweist.
